# FASCICULE DE BREVET EUROPEEN

(11) **EP 3 734 749 B1**
(45) Date de publication et mention de la délivrance du brevet: **01.03.2023**
(21) Numéro de dépôt: 20172538.9
(22) Date de dépôt: 30.04.2020
(51) Int. Cl.: H01P 3/16, G01S 7/03, G01S 13/931, H01Q 1/32, G01S 7/40

(54) **SYSTÈME D'ÉMISSION-RÉCEPTION D'ONDES RADIO**
SENDE-/EMPFANGSSYSTEM VON FUNKWELLEN
SYSTEM FOR TRANSMITTING/RECEIVING RADIO WAVES

(30) Priorité: 03.05.2019 FR 1904678
(43) Date de publication de la demande: 04.11.2020
(73) Titulaire: Commissariat à l'Energie Atomique et aux Energies Alternatives, 75015 Paris (FR)
(72) Inventeur: BELOT, Didier, 38054 GRENOBLE CEDEX 9 (FR); HAMEAU, Frédéric, 38054 GRENOBLE CEDEX 9 (FR); MARTINEAU, Baudouin, 38054 GRENOBLE CEDEX 9 (FR)
(74) Mandataire: Cabinet Beaumont

(56) Documents cités:
- WO-A1-2017/102157
- WO-A1-2018/046353
- JP-A- H10 160 837
- JP-A- H11 237 466
- US-A1- 2012 050 094
- US-A1- 2016 240 907
- US-A1- 2018 210 079
- US-B1- 6 400 311

## Description

### Domaine technique

La présente description concerne de façon générale le domaine des systèmes d'émission et/ou de réception d'ondes radio vers et/ou depuis un milieu extérieur non guidé, par exemple l'air ou l'espace. Elle concerne en particulier les systèmes radar embarqués dans des véhicules automobiles.

### Technique antérieure

Dans l'industrie automobile, et tout particulièrement avec le développement des véhicules autonomes, il existe un besoin grandissant de sonder l'environnement autour des véhicules. Pour cela, les véhicules automobiles sont désormais équipés de capteurs radar. Un même véhicule peut typiquement comporter plusieurs radars, par exemple un ou plusieurs radars longue portée, par exemple d'environ 150 mètres de portée, utilisant par exemple une fréquence porteuse de 77 GHz avec une modulation de type FMCW, et un ou plusieurs radars courte portée, par exemple d'environ 30 mètres de portée, utilisant par exemple une bande de 4 GHz de largeur centrée autour de 79 GHz, par exemple avec une modulation large bande harmonique ou impulsionnelle.

Les informations fournies par les capteurs radar sont transmises à une unité centrale, par exemple un ordinateur de bord, qui les traite et prend en conséquence des décisions quant au pilotage du véhicule.

De façon classique, chaque capteur radar comprend son propre circuit de conversion analogique-numérique, et transmet les informations détectées sous la forme de mots numériques électroniques, via un ou plusieurs conducteurs métalliques, par exemple en cuivre.

Un inconvénient réside alors dans le coût et le poids relativement élevés des conducteurs métalliques reliant les capteurs radar à l'unité centrale. De plus, l'immunité aux bruits électromagnétiques, généralement importants dans un véhicule motorisé, est alors relativement faible.

Une autre possibilité est de prévoir, dans chaque capteur radar, un circuit adapté à convertir les signaux numériques électroniques fournis par le capteur en des signaux numériques optiques, et de transmettre ces signaux optiques à l'unité centrale via des fibres optiques. Une conversion inverse, optique-électronique, est alors réalisée au niveau de l'unité centrale.

Cette approche permet de limiter le poids des câbles de connexion et améliore l'immunité aux bruits électromagnétiques, mais présente l'inconvénient d'être onéreuse du fait de la double transformation électronique-optique-électronique. De plus, la précision requise pour le transfert d'énergie entre le modulateur optique et la fibre optique (typiquement de quelques micromètres) est difficile à atteindre compte tenu des vibrations usuelles d'un véhicule, ou implique d'utiliser des connecteurs particulièrement coûteux.

Les documents US2016/240907 et US2018/210079 décrivent des systèmes radar utilisant des guides d'ondes diélectriques.

### Résumé de l'invention

Ainsi, un mode de réalisation prévoit un système d'émission-réception d'ondes radio, comportant :
- au moins une paire de guides d'onde en un matériau diélectrique comprenant un guide d'ondes d'émission et un guide d'onde de réception ;
- un circuit d'émission-réception couplé à une première extrémité de chacun desdits guides d'onde d'émission et de réception, adapté à émettre et recevoir des ondes radio se propageant respectivement dans lesdits guides d'onde d'émission et de réception ; et
- au moins une antenne d'émission et une antenne de réception (105R) respectivement couplées à une deuxième extrémité desdits guides d'onde d'émission et de réception, et adaptées à émettre ou recevoir lesdites ondes vers/depuis un milieu extérieur non guidé,
dans lequel le système comporte en outre un dispositif d'initialisation comprenant un interrupteur d'initialisation commandable pour, lors d'une phase d'initialisation, court-circuiter l'antenne d'émission et l'antenne de réception de façon à mesurer un temps de propagation aller-retour des ondes radio dans lesdits guides d'onde d'émission et de réception, le système étant configuré pour être utilisé comme radar pour estimer des distances par mesure de temps de vol entre une onde radio aller émise par le circuit d'émission-réception et une onde radio retour reçue par le circuit d'émissionréception après réflexion sur un objet extérieur.

Selon un mode de réalisation, au moins un guide d'onde comprend un coeur en un premier matériau diélectrique, le coeur étant en contact et/ou recouvert et/ou entouré d'un deuxième matériau diélectrique de constante diélectrique inférieure à celle du premier matériau.

Selon un mode de réalisation, le guide d'onde comprend une gaine en le deuxième matériau diélectrique, le coeur étant en contact avec la gaine sur toute sa périphérie sur sensiblement toute la longueur du guide.

Selon un mode de réalisation, à l'exception des extrémités du guide d'onde, le coeur n'est pas en contact avec un matériau électriquement conducteur.

Selon un mode de réalisation, le coeur présente une section transversale pleine.

Selon un mode de réalisation, le coeur présente une section transversale cruciforme.

Selon un mode de réalisation, la gaine est constituée par un élément plastique de carrosserie de véhicule.

Selon un mode de réalisation, la deuxième extrémité d'au moins un guide d'onde est couplée à au moins une antenne par l'intermédiaire d'un amplificateur (401, 403).

Selon un mode de réalisation, le système est configuré pour, lors d'une estimation de distance d'un objet extérieur, soustraire au temps de vol déterminé le temps de propagation mesuré lors de la phase d'initialisation.

Selon un mode de réalisation, le dispositif d'initialisation comprend en outre, couplé à la deuxième extrémité d'au moins un guide d'onde, un circuit de commande de l'interrupteur d'initialisation, le circuit de commande étant adapté à détecter une séquence radio d'initialisation transmise par ledit au moins un guide d'onde et à commander en conséquence la fermeture de l'interrupteur d'initialisation.

Selon un mode de réalisation, les ondes radio ont une fréquence porteuse comprise entre 10 GHz et 1 THz et de préférence entre 30 GHz et 300 GHz.

### Brève description des dessins

Ces caractéristiques et leurs avantages, ainsi que d'autres, seront exposés en détail dans la description suivante de modes de réalisation particuliers faite à titre non limitatif en relation avec les figures jointes parmi lesquelles :
la figure 1 représente de façon schématique un exemple d'un système d'émission-réception d'ondes radio selon un mode de réalisation ;
la figure 2 représente de façon schématique des exemples de réalisation d'un guide d'onde du système de la figure 1 ;
la figure 3 représente de façon schématique une variante de réalisation du système de la figure 1 ;
la figure 4 représente de façon schématique une autre variante de réalisation du système de la figure 1 ;
la figure 5 représente de façon schématique une variante de réalisation du système de la figure 4 ;
la figure 6 représente de façon schématique un exemple de réalisation d'un circuit de commande d'un interrupteur d'initialisation du système de la figure 5 ; et
la figure 7 est un chronogramme illustrant le fonctionnement du circuit de commande de la figure 6.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la réalisation des circuits d'émission-réception et la réalisation des antennes des systèmes décrits n'ont pas été détaillées, les modes de réalisation décrits étant compatibles avec les circuits d'émission-réception et antennes usuels des systèmes d'émission-réception d'ondes radio, ou la réalisation de ces circuits et antennes étant à la portée de l'homme du métier à partir des indications de la présente description.

Sauf précision contraire, lorsque l'on fait référence à deux éléments connectés électriquement entre eux, cela signifie directement connectés électriquement sans éléments intermédiaires autres que des conducteurs, et lorsque l'on fait référence à deux éléments reliés ou couplés entre eux, cela signifie que ces deux éléments peuvent être connectés électriquement ou être reliés ou couplés électriquement par l'intermédiaire d'un ou plusieurs autres éléments.

Sauf précision contraire, les expressions "environ", "approximativement", "sensiblement", et "de l'ordre de" signifient à 10 % près, de préférence à 5 % près.

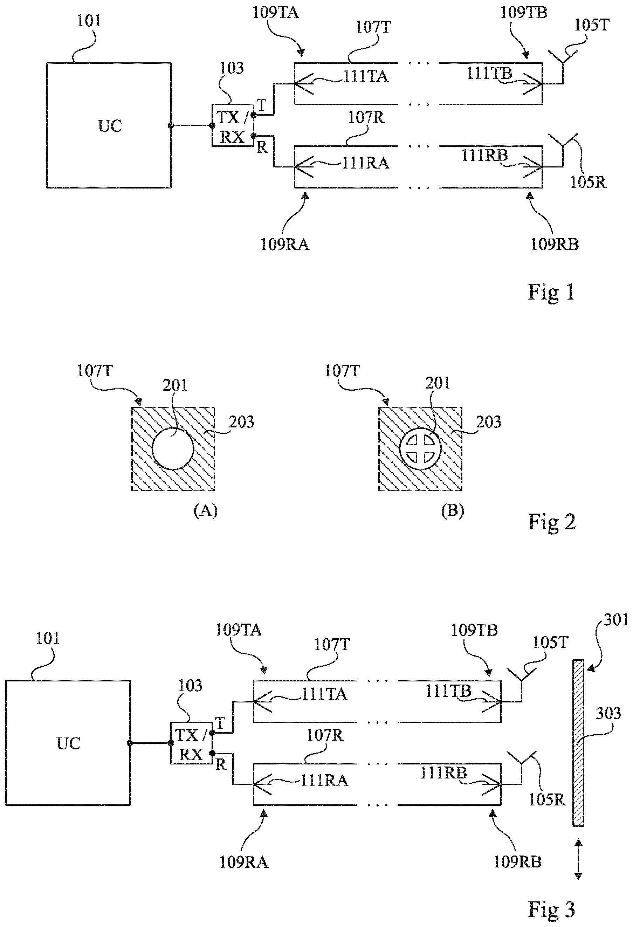

La figure 1 représente de façon schématique un exemple d'un système radar selon un mode de réalisation. Le système de la figure 1 est par exemple un système radar pour véhicule automobile.

Le système de la figure 1 comprend une unité centrale 101 (UC), par exemple disposée dans une région centrale du véhicule. Le système de la figure 1 comprend en outre un ou plusieurs circuits 103 (TX/RX) d'émission-réception d'ondes radio reliés électriquement, par exemple connectés électriquement, à l'unité centrale 101. Sur la figure 1, un unique circuit d'émission-réception 103 a été représenté. Les circuits d'émission-réception 103 peuvent être disposés au voisinage de l'unité centrale 101, par exemple à une distance inférieure à 0,2 mètre de l'unité centrale 101. Chaque circuit d'émission-réception 103 est adapté à émettre et à recevoir une onde radio sous la forme d'un signal électronique se propageant dans un conducteur électrique, par exemple métallique. Chaque circuit 103 peut être commandé en émission et/ou en réception par l'unité centrale 101.

Le système de la figure 1 comprend en outre, pour chaque circuit 103, une antenne métallique d'émission 105T adaptée à émettre vers l'extérieur du véhicule, c'est-à-dire vers un milieu extérieur non guidé, les ondes radio fournies par le circuit 103, et une antenne métallique de réception 105R adaptée à recevoir depuis l'extérieur du véhicule, c'est-à-dire depuis un milieu extérieur non guidé, des ondes radio à destination du circuit 103. Les antennes 105T, 105R peuvent être éloignées de l'unité centrale 101 et du circuit 103. A titre d'exemple, les antennes 105T et 105R sont situées à une distance supérieure à 0,5 mètre de l'unité centrale et du circuit 103.

Selon un aspect du mode de réalisation de la figure 1, les antennes 105T, 105R sont reliées au circuit 103 par l'intermédiaire de guides d'ondes diélectriques. Plus particulièrement, dans l'exemple de la figure 1, un premier guide d'onde diélectrique 107T relie une borne d'émission T du circuit 103 à l'antenne 105T, et un deuxième guide d'onde diélectrique 107R relie une borne de réception R du circuit 103 à l'antenne 105R. Chacun des guides d'ondes 107T et 107R comprend un coeur (non détaillé sur la figure 1) en un premier matériau diélectrique, par exemple un matériau plastique, ayant une première constante diélectrique εᵣ₂, par exemple comprise entre 1 et 4. De préférence, le coeur de chaque guide est en contact et/ou recouvert et/ou entouré d'un deuxième matériau diélectrique, par exemple un matériau plastique, présentant une deuxième constante diélectrique εᵣ₁ inférieure à εᵣ₂. Chacun des guides 107T et 107R comprend par exemple une gaine (non détaillée sur la figure 1) en le deuxième matériau diélectrique.

En fonctionnement, les ondes radio se propagent essentiellement dans le coeur de chaque guide, c'est-à-dire que la majeure partie de l'énergie se propage à l'intérieur du premier matériau diélectrique. En pratique, plus la fréquence du signal sera élevée, plus la concentration dans le coeur sera importante. A titre d'exemple dans le cas d'un coeur à section circulaire pleine, pour un signal radio à 100 GHz, plus de 60 % de l'énergie se propage dans le coeur. Cette concentration de l'énergie dans le coeur se trouve renforcée par la prévision d'une gaine périphérique en un matériau de plus faible constante diélectrique. Au-dessus de 150 GHz, la concentration dans le coeur peut tendre vers 100 %. La gaine périphérique en un matériau de plus faible constante diélectrique permet d'éviter qu'un élément extérieur, par exemple métallique, vienne dévier une partie de l'énergie.

A l'exception des extrémités du guide, le coeur du guide n'est pas en contact avec un matériau électriquement conducteur, notamment métallique.

Le guide 107T a une première extrémité couplée à la borne d'émission T du circuit 103 par l'intermédiaire d'un dispositif de couplage 109TA, et une deuxième extrémité couplée à l'antenne 105T par l'intermédiaire d'un dispositif de couplage 109TB. Le guide 107R a quant à lui une première extrémité couplée à la borne de réception R du circuit 103 par l'intermédiaire d'un dispositif de couplage 109RA, et une deuxième extrémité couplée à l'antenne 105R par l'intermédiaire d'un dispositif de couplage 109RB.

Chacun des dispositifs de couplage 109TA, 109TB, 109RA, 109RB comprend par exemple, au voisinage de l'extrémité correspondante du guide 107T, 107R correspondant, une antenne métallique 111TA, respectivement 111TB, respectivement 111RA, respectivement 111RB, noyée dans le matériau diélectrique du coeur du guide et connectée électriquement respectivement à la borne T du circuit 103, à l'antenne 105T, à la borne R du circuit 103, et à l'antenne 105R.

En fonctionnement, sur commande de l'unité centrale 101, le circuit d'émission-réception 103 fournit sur sa borne T un signal radio, ou signal aller, qui est injecté dans le guide 107T par l'intermédiaire du dispositif de couplage 109TA. Le signal radio aller se propage alors jusqu'à l'extrémité opposée du guide 107T, où il est extrait du guide et transmis à l'antenne d'émission 105T par le dispositif de couplage 109TB. Le signal radio aller est alors émis à l'extérieur du véhicule par l'antenne 105T.

Lorsqu'il rencontre un corps réfléchissant, par exemple un obstacle dont on souhaite déterminer l'éloignement, le signal radio émis par l'antenne d'émission 105T est réfléchi en direction de l'antenne de réception 105R. Le signal radio réfléchi, ou signal retour, est reçu par l'antenne 105R, puis injecté dans le guide 107R par le dispositif de couplage 109RB. Le signal retour se propage alors jusqu'à l'extrémité opposée du guide 107R, où il est extrait du guide et transmis à la borne de réception R du circuit 103, par le dispositif de couplage 109RA.

Dans cet exemple, les dispositifs de couplage 109TA, 109TB, 109RA, 109RB sont des dispositifs passifs n'introduisant aucune modification de forme du signal radio, à l'exception d'éventuelles déformations parasites. En particulier, les dispositifs de couplage 109TA, 109TB, 109RA et 109RB ne modifient pas la fréquence porteuse ni la modulation des signaux radio. Autrement dit, la forme du signal radio aller émis par l'antenne 105T vers l'extérieur du véhicule est sensiblement la même que la forme du signal radio fourni par le circuit 103 sur sa borne d'émission T, et la forme du signal radio reçu par le circuit 103 sur sa borne de réception R est sensiblement la même que la forme du signal radio retour reçu par l'antenne 105R.

Le circuit 103 et/ou l'unité centrale 101 sont configurés pour, à partir des signaux radio aller et retour, déterminer la présence éventuelle d'un obstacle en vis-à-vis du véhicule, et, le cas échéant, estimer la distance entre le véhicule et l'obstacle.

En pratique, l'unité centrale 101 peut être reliée à une pluralité de radars comprenant chacun un circuit d'émission-réception 103, un guide d'émission 107T, une antenne d'émission 105T, une antenne de réception 105R, un guide de réception 107R, et des dispositifs de couplage 109TA, 109TB, 109RA, 109RB associés.

Un avantage du mode de réalisation de la figure 1 réside dans le poids relativement faible des guides d'ondes diélectriques assurant la liaison entre le circuit d'émission-réception 103 et les antennes 107T, 107R de chaque radar. Les guides diélectriques permettent une transmission des signaux radio, sur des distances relativement importantes, typiquement de l'ordre de plusieurs mètres dans un véhicule automobile, et présentent l'avantage d'être peu sensibles aux perturbations électromagnétiques.

Le système de la figure 1 a en outre pour avantage de ne pas présenter de surcoût significatif par rapport à un système classique dans lequel les capteurs radars sont reliés à l'unité centrale par des câbles électriquement conducteurs. En particulier, les dispositifs de couplage 109TA, 109TB, 109RA, 109RB et les guides 107T, 107R sont des éléments relativement simples et peu onéreux. De plus, le circuit 103 peut être un circuit d'émission-réception classique de capteur radar, par exemple un circuit du commerce destiné habituellement à être connecté directement aux antennes d'émission et de réception d'un capteur radar.

La figure 2 représente de façon schématique des exemples de réalisation du guide d'onde diélectrique 107T du système de la figure 1. Bien que non représenté sur la figure 2, le guide 107R peut être identique ou similaire au guide 107T. La figure 2 comprend plus particulièrement deux vues en coupe transversales (A) et (B), correspondant à deux exemples de réalisation du guide 107T.

Dans l'exemple de la vue (A) de la figure 2, le guide comprend un coeur 201 en un matériau diélectrique de constante diélectrique εᵣ₂, ayant la forme d'un fil plein à section transversale circulaire. A titre d'exemple, le coeur 201 peut être un fil de polytétrafluoroéthylène (PTFE) solide, par exemple de l'ordre de 2 mm de diamètre. Dans cet exemple, sur toute sa périphérie et sur sensiblement toute sa longueur, le coeur 201 est entièrement entouré par et en contact avec une gaine 203 en un matériau diélectrique de constante diélectrique εᵣ₁ inférieure à εᵣ₂. A titre d'exemple, la gaine 203 peut être en une mousse de PTFE. A titre de variante, la gaine 203 peut être omise, le coeur 201 étant alors entouré par et en contact avec de l'air sur toute sa périphérie. La prévision d'une gaine 203 présente toutefois l'avantage de garantir le confinement des signaux radio à l'intérieur du guide même en cas de contact avec un élément extérieur, par exemple un élément métallique. De façon préférentielle, le coeur 201 du guide est noyé directement dans un élément plastique de carrosserie du véhicule, qui constitue alors la gaine du guide.

L'exemple de réalisation de la vue (B) diffère de celui de la vue (A) principalement par la forme du coeur 201, en section transversale. Dans l'exemple de la vue (B), le fil 201 constituant le coeur du guide est un fil extrudé de section transversale cruciforme. Plus particulièrement, dans cet exemple, en section transversale, le fil 201 a la forme d'une roue circulaire à quatre rayons orthogonaux deux à deux, définissant une croix dont le centre coïncide avec le centre de la roue. Un avantage de cette structure est qu'elle permet de concentrer le champ radio vers le centre de la croix.

La figure 3 représente de façon schématique une variante de réalisation du système de la figure 1.

De façon classique, un capteur radar fonctionne par mesure de temps de vol entre un signal radio aller émis par le capteur, et un signal retour réfléchi par un objet à détecter et reçu par le capteur.

Dans le système de la figure 1, le circuit d'émissionréception 103 du radar est distant des antennes d'émission 105T et de réception 105R du radar. Il convient donc, dans les mesures de temps de vol réalisées par le circuit 103 et/ou par l'unité centrale 101, de prendre en compte les temps de propagation des ondes radio dans les guides d'ondes diélectriques 107T, 107R.

Le système de la figure 3 comprend un dispositif d'initialisation ou de calibration 301 comprenant un volet réfléchissant 303, par exemple un volet métallique, actionnable au moyen d'un moteur non détaillé sur la figure. Lors d'une phase d'initialisation, le volet réfléchissant 303 est fermé, c'est-à-dire placé en vis-à-vis des antennes 105T, 105R du radar, à une distance prédéfinie des antennes, par exemple une distance comprise entre 0,1 et 10 centimètres. L'unité centrale 101 commande alors le circuit 103 pour émettre un signal radio via sa borne d'émission T. Le temps de retour de ce signal vers la borne de réception R du circuit 103 après réflexion sur le volet métallique 303 est mesuré et constitue une référence pour les mesures ultérieures de distance réalisées par le radar. Le volet métallique est alors ouvert, c'est-à-dire retiré pour permettre la détection d'objets extérieurs par le radar. A titre d'exemple, la phase d'initialisation peut être réitérée à chaque démarrage du véhicule, ce qui permet de prendre en compte d'éventuelles dérives du temps de propagation des signaux radio à l'intérieur des guides 107T, 107R, dues par exemple au vieillissement des guides. Pendant les phases d'arrêt du véhicule, le volet réfléchissant 303 peut être maintenu en position fermée, et peut alors avoir pour fonction supplémentaire de protéger les antennes 105T, 105R.

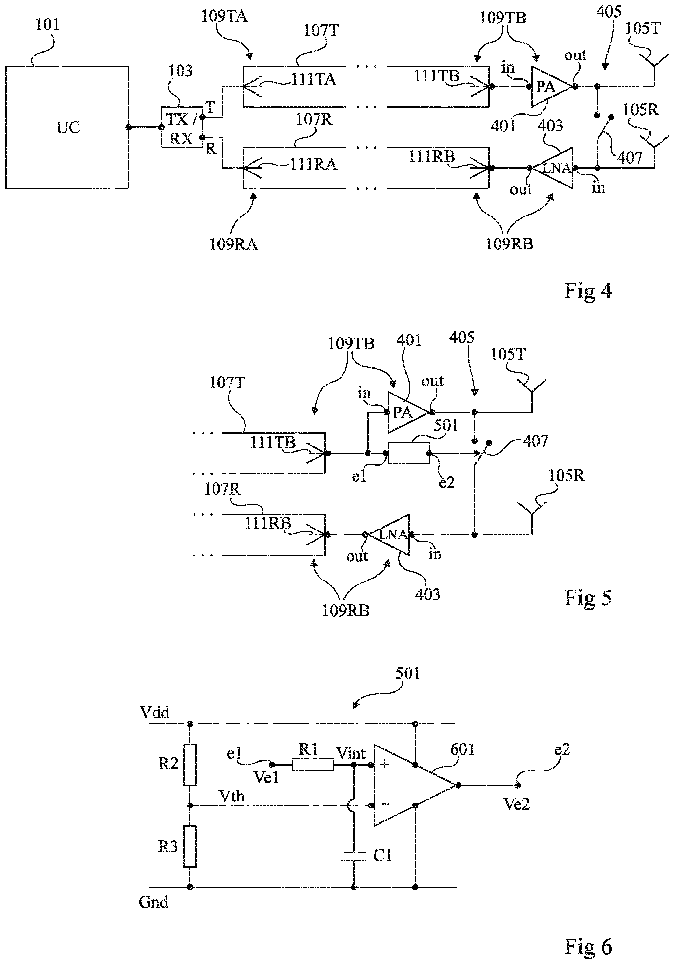

La figure 4 représente de façon schématique une autre variante de réalisation du système de la figure 1.

Dans l'exemple de la figure 1, les dispositifs de couplage 109TA, 109TB, 109RA, 109RB sont des dispositifs passifs. Dans certains cas, il peut toutefois être souhaitable de prévoir des dispositifs de couplage actifs adaptés à amplifier les signaux radio émis ou reçus.

Le système de la figure 4 diffère du système de la figure 1 en ce que, dans l'exemple de la figure 4, le dispositif de couplage 109TB de sortie du guide d'onde 107T comprend un amplificateur de puissance 401 (PA) recevant, sur une borne d'entrée in, le signal radio de sortie du guide d'onde 107T et fournissant, sur une borne de sortie out, une image amplifiée de ce signal radio. La borne de sortie out de l'amplificateur 401 est reliée électriquement, par exemple connectée électriquement, à l'antenne d'émission 105T du radar. La borne d'entrée in de l'amplificateur 401 peut être reliée électriquement, par exemple connectée électriquement, à l'antenne 111TB du dispositif de couplage 109TB.

Le système de la figure 4 diffère de plus du système de la figure 1 en ce que, dans l'exemple de la figure 4, le dispositif de couplage 109RB d'entrée du guide d'onde 107R comprend un amplificateur faible bruit 403 (LNA) recevant, sur une borne d'entrée in, le signal radio fourni par l'antenne de réception 105R, et fournissant, sur une borne de sortie out, une image amplifiée de ce signal radio. La borne d'entrée in de l'amplificateur 403 est reliée électriquement, par exemple connectée électriquement, à l'antenne de réception 105R du radar. La borne de sortie out de l'amplificateur 403 peut être reliée électriquement, par exemple connectée électriquement, à l'antenne 111RB.

L'amplificateur 401 permet de compenser l'atténuation du signal radio dans le guide 107TB, et l'amplificateur 403 permet d'augmenter le rapport signal à bruit en réception. Les amplificateurs 401 et 403 n'introduisent pas de modification de forme du signal radio. Ainsi, de même que dans l'exemple de la figure 1, la forme du signal radio aller émis par l'antenne 105T vers l'extérieur du véhicule est sensiblement la même que la forme du signal radio fourni par le circuit 103 sur sa borne d'émission T, et la forme du signal radio reçu par le circuit 103 sur sa borne de réception R est sensiblement la même que la forme du signal radio retour reçu par l'antenne 105R.

Dans l'exemple de la figure 4, on a en outre représenté un dispositif d'initialisation ou de calibration 405 comprenant un interrupteur radio 407 ayant une première borne de conduction reliée, par exemple connectée, à une borne de sortie du dispositif de couplage 109TB, c'est-à-dire, dans cet exemple, à la borne de sortie out de l'amplificateur 401, et une deuxième borne de conduction reliée, par exemple connectée, à une borne d'entrée du dispositif de couplage 109RB, c'est-à-dire, dans cet exemple, à la borne d'entrée in de l'amplificateur 403.

Par interrupteur radio, on entend ici un interrupteur adapté, à l'état ouvert, à bloquer la transmission directe des signaux radio de la borne de sortie out de l'amplificateur 401 vers la borne d'entrée in de l'amplificateur 403, forçant ainsi le passage des ondes radio par les antennes d'émission 105T et de réception 105R, et, à l'état fermé, à transmettre directement les signaux radio de la borne de sortie out de l'amplificateur 401 vers la borne d'entrée in de l'amplificateur 403, court-circuitant ainsi les antennes 105T et 105R. L'interrupteur 407 est par exemple un interrupteur de type MEMS, ou un interrupteur à transistors, par exemple tel que décrit dans la demande de brevet FR3048570, ou encore un interrupteur comprenant un matériau à changement de phase, par exemple tel que décrit dans la demande de brevet EP3324455.

Lors d'une phase d'initialisation, l'interrupteur 407 est maintenu fermé. L'unité centrale 101 commande alors le circuit 103 pour émettre un signal radio via sa borne d'émission T. Le temps de retour de ce signal vers la borne de réception R du circuit 103 en passant par l'interrupteur 407 est mesuré et constitue une référence pour les mesures ultérieures de distance réalisées par le radar. L'interrupteur 407 est ensuite ouvert pour permettre la détection d'objets extérieurs par le radar. A titre d'exemple, la phase d'initialisation peut être réitérée à chaque démarrage du véhicule.

On notera que le dispositif d'initialisation électronique 405 du système de la figure 4 peut être remplacé par le dispositif d'initialisation mécanique 301 décrit en relation avec la figure 3. De façon similaire, le dispositif d'initialisation mécanique 301 du système de la figure 3 peut être remplacé par le dispositif d'initialisation électronique 405 décrit en relation avec la figure 4.

La figure 5 représente de façon schématique une variante de réalisation du système de la figure 4. Par souci de simplification, les dispositifs de couplage 107TA, 109RA, le circuit d'émission-réception 103, et l'unité centrale 101, n'ont pas été représentés sur la figure 5.

Dans la variante de la figure 5, le dispositif d'initialisation 405 comprend en outre un circuit 501 de commande de l'interrupteur 407. Le circuit 501 a une borne d'entrée e1 reliée à l'antenne de sortie 111TB du guide d'onde 107T, par exemple par l'intermédiaire d'un coupleur (non détaillé sur la figure), et une borne de sortie e2 reliée, par exemple connectée, à une borne de commande de l'interrupteur 407.

Le fonctionnement du système de la figure 5 est le suivant. Au début d'une phase d'initialisation, l'unité centrale 101 commande le circuit d'émission-réception 103 pour fournir, sur sa borne d'émission T, une séquence particulière prédéterminée de signaux radio, appelée séquence d'initialisation. La séquence d'initialisation est portée par la fréquence porteuse du radar, par exemple de l'ordre de 80 GHz. La séquence d'initialisation est transmise par le guide d'onde 107T vers l'amplificateur 401. En sortie du guide d'onde 107T, une partie du signal radio est dérivée vers le circuit 501, qui détecte la séquence d'initialisation et commande en conséquence la fermeture de l'interrupteur 407. Le signal d'initialisation passe alors directement de la sortie out de l'amplificateur 401 vers l'entrée in de l'amplificateur 403, via l'interrupteur 407, pour être ensuite rebouclé vers la borne de réception R du circuit 103 via le guide d'onde 107R. Le temps de retour du signal d'initialisation est mesuré et constitue une référence pour les mesures ultérieures de distance réalisées par le radar. Lorsqu'un signal radio ne correspondant pas à une séquence d'initialisation est émis par le circuit 103, le circuit de commande 501 maintien l'interrupteur 407 ouvert.

Un avantage de la variante de la figure 5 est qu'elle permet de commander la fermeture de l'interrupteur d'initialisation 407 depuis l'unité centrale 101, par l'intermédiaire du guide d'onde 107T, sans nécessiter un câble électriquement conducteur reliant l'unité centrale 101 à la borne de commande de l'interrupteur 407.

La figure 6 est un schéma électrique illustrant un exemple de réalisation du circuit 501 de commande de l'interrupteur d'initialisation 407 du système de la figure 5.

Dans cet exemple, le circuit 501 comprend un amplificateur opérationnel 601, monté en détecteur de seuil. Plus particulièrement, dans l'exemple représenté, le circuit 501 comprend une résistance R1 ayant une première extrémité reliée, par exemple connectée, à la borne d'entrée e1 du circuit 501, et une deuxième extrémité reliée, par exemple connectée, à l'entrée non inverseuse (+) de l'amplificateur opérationnel 601. Le circuit 501 comprend en outre un pont diviseur de tension comportant une association en série d'une résistance R2 et d'une résistance R3, entre un noeud d'application d'un potentiel d'alimentation haut Vdd et un noeud d'application d'un potentiel d'alimentation bas Gnd (par exemple la masse) de l'amplificateur opérationnel 601. Le point milieu entre les résistances R2 et R3 est relié, par exemple connecté, à l'entrée inverseuse (-) de l'amplificateur opérationnel 601. Le circuit 501 comprend de plus un condensateur C1 ayant une première électrode reliée, par exemple connectée, à l'entrée non inverseuse de l'amplificateur opérationnel 601, et une deuxième électrode reliée, par exemple connectée, au noeud d'application du potentiel Gnd. La sortie de l'amplificateur opérationnel 601 est reliée, par exemple connectée, à la borne de sortie e2 du circuit 501.

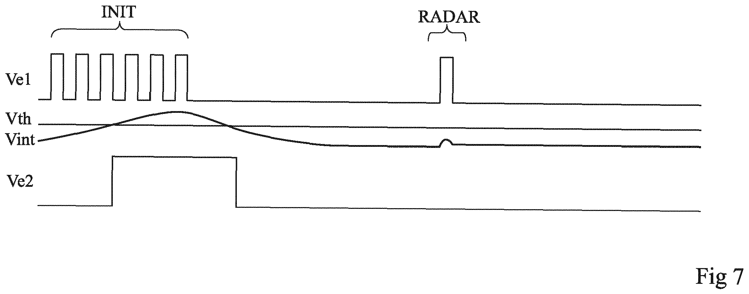

Le fonctionnement du circuit 501 de la figure 6 va maintenant être décrit en relation avec la figure 7.

La figure 7 est un chronogramme illustrant l'évolution, en fonction du temps, de la tension Ve1 sur la borne d'entrée e1 du circuit 501, de la tension Ve2 sur la borne de sortie e2 du circuit 501, de la tension Vth appliquée sur l'entrée inverseuse de l'amplificateur opérationnel 601, et de la tension Vint appliquée sur l'entrée non inverseuse de l'amplificateur opérationnel 601.

La séquence d'initialisation INIT comprend par exemple un grand nombre d'impulsions successives rapprochées, tel qu'illustré sur la figure 7 (signal Ve1). La résistance R1 et le condensateur C1 forment un filtre capacitif intégrant l'énergie transmise. La tension Vint correspond au signal de sortie du filtre intégrateur, appliquée sur l'entrée non inverseuse de l'amplificateur opérationnel 601.

Le pont diviseur de tension formé par les résistances R2 et R3 génère une tension de référence Vth=Vdd*R3/(R2+R3), appliquée sur l'entrée inverseuse de l'amplificateur opérationnel 601.

Lorsque la tension Vint dépasse le seuil Vth, la tension de sortie Ve2 de l'amplificateur opérationnel passe à un état haut, correspondant à un état de commande à l'état fermé de l'interrupteur 407. Les impulsions suivantes de la séquence d'initialisation sont alors rebouclées directement vers le circuit 103, via l'interrupteur 407.

Lorsque la tension Vint est inférieure au seuil Vth, la tension de sortie Ve2 de l'amplificateur opérationnel est à un état bas, correspondant à un état de commande à l'état ouvert de l'interrupteur 407. En particulier, lorsqu'une impulsion radar classique, par exemple une impulsion unique désignée par la référence RADAR sur la figure 7, est envoyée par le circuit 103, l'intégration de cette impulsion ne conduit pas à dépasser le seuil Vth, de sorte que l'interrupteur 407 reste ouvert.

On notera que la séquence d'initialisation INIT de la figure 7 peut être directement générée par le circuit d'émission-réception 103 dans le cas d'un radar impulsionnel. Dans le cas d'un radar utilisant une modulation de type FMCW, le circuit d'émission-réception 103 peut être complété par un circuit d'émission-réception additionnel (non détaillé sur les figures) relié à l'unité centrale 101 et couplé aux guides d'ondes 107T, 107R via les dispositifs de couplage 107TA, 109RA, le circuit d'émission-réception additionnel étant spécifiquement adapté à émettre et recevoir la séquence d'initialisation INIT lors des phases d'initialisation.

Des exemples de réalisation de dispositifs d'initialisation ou de calibration permettant de mesurer le temps de propagation aller-retour des ondes radio dans les guides d'ondes diélectriques 107T, 107R ont été décrits en relation avec les figures 3 à 7. Lors d'une mesure de distance au moyen du système radar, ce temps de propagation peut être soustrait au temps de vol mesuré, de façon à obtenir une estimation précise de la distance entre les antennes d'émission-réception et l'objet détecté.

En complément de la calibration décrite ci-dessus, une calibration supplémentaire du circuit d'émission-réception peut être mise en oeuvre, de façon classique, pour mesurer le temps de propagation aller-retour du signal dans le circuit d'émission-réception lui-même. Pour cela, les bornes T et R du circuit d'émission-réception peuvent être court-circuitées en amont des guides d'ondes 107T, 107R, au moyen d'un interrupteur de calibration supplémentaire, non représenté, par exemple intégré avec le circuit d'émission-réception 103 dans une même puce semiconductrice. On notera que le temps de propagation interne au circuit d'émission-réception est inclus dans le temps de propagation mesuré lors des étapes de calibration décrites précédemment. On notera que la réalisation d'une telle mesure de temps de propagation « interne » au circuit intégré a plutôt pour intérêt de vérifier le bon fonctionnement interne du circuit intégré et non de définir un temps de propagation minimum.

On notera que le système selon la présente invention permet avantageusement de connecter plusieurs jeux d'antennes d'émission-réception, via différentes paires de guides d'ondes, à un même circuit d'émission-réception. Dans ce cas, le circuit d'émission pourra alors comprendre des moyens de mémorisation du temps de propagation aller-retour dans les guides d'ondes spécifique à chaque radar formé par chaque paire de guide d'ondes et leurs antennes d'émission-réception associées. Chaque temps de propagation associé à une paire de guides d'onde d'émission/réception sera déterminé lors d'une phase de calibration en court-circuitant les antennes associées. Ainsi, à partir d'un unique circuit de calcul interne au circuit d'émission-réception, il sera possible de définir précisément le temps de propagation mesuré « depuis les antennes » situées dans des emplacements distincts pouvant être plus ou moins éloignés du circuit d'émissionréception partagé.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, on a décrit ci-dessus uniquement des exemples de réalisation de systèmes radars comportant une antenne d'émission 105T distincte de l'antenne de réception 105R, et un guide d'onde d'émission 107T distinct du guide d'onde de réception 107R. A titre de variante, les antennes 105T et 105R peuvent être confondues et former une unique antenne d'émission-réception, et/ou les guides d'ondes 107T et 107R peuvent être confondus et former un unique guide d'onde d'émission-réception.

A titre d'exemple, ce type de lien entre une unité centrale et une antenne d'émission-réception extérieure peut être utilisé dans des applications d'imagerie par signaux radio, par exemple des applications d'imagerie térahertz.

## Revendications

1. Système d'émission-réception d'ondes radio, comportant :
- au moins une paire de guides d'onde (107T, 107R) en un matériau diélectrique comprenant un guide d'ondes d'émission et un guide d'onde de réception ;
- un circuit d'émission-réception (103) couplé à une première extrémité de chacun desdits guides d'onde d'émission et de réception, adapté à émettre et recevoir des ondes radio se propageant respectivement dans lesdits guides d'onde d'émission et de réception ; et
- au moins une antenne d'émission (105T) et une antenne de réception (105R) respectivement couplées à une deuxième extrémité desdits guides d'onde d'émission et de réception, et adaptées à émettre ou recevoir lesdites ondes vers/depuis un milieu extérieur non guidé,
dans lequel le système comporte en outre un dispositif d'initialisation (405) comprenant un interrupteur d'initialisation (407) commandable pour, lors d'une phase d'initialisation, court-circuiter l'antenne d'émission (105T) et l'antenne de réception (105R) de façon à mesurer un temps de propagation aller-retour des ondes radio dans lesdits guides d'onde d'émission et de réception,
le système étant configuré pour être utilisé comme radar pour estimer des distances par mesure de temps de vol entre une onde radio aller émise par le circuit d'émissionréception (103) et une onde radio retour reçue par le circuit d'émission-réception (103) après réflexion sur un objet extérieur.

2. Système selon la revendication 1, dans lequel au moins un guide d'onde comprend un coeur (201) en un premier matériau diélectrique, le coeur (201) étant en contact et/ou recouvert et/ou entouré d'un deuxième matériau diélectrique de constante diélectrique inférieure à celle du premier matériau.

3. Système selon la revendication 2, dans lequel ledit au moins un guide d'onde comprend une gaine (203) en le deuxième matériau diélectrique, le coeur (201) étant en contact avec la gaine (203) sur toute sa périphérie sur sensiblement toute la longueur du guide.

4. Système selon la revendication 2 ou 3, dans lequel, à l'exception des extrémités dudit au moins un guide d'onde, le coeur (201) n'est pas en contact avec un matériau électriquement conducteur.

5. Système selon l'une quelconque des revendications 2 à 4, dans lequel le coeur (201) présente une section transversale pleine.

6. Système selon l'une quelconque des revendications 2 à 4, dans lequel le coeur (201) présente une section transversale cruciforme.

7. Système selon la revendication 3, dans lequel la gaine (203) est constituée par un élément plastique de carrosserie de véhicule.

8. Système selon l'une quelconque des revendications 1 à 7, dans lequel la deuxième extrémité d'au moins un guide d'onde (107T, 107R) est couplée à au moins une antenne (105T, 105R) par l'intermédiaire d'un amplificateur (401, 403) .

9. Système selon l'une quelconque des revendications 1 à 8, configuré pour, lors d'une estimation de distance d'un objet extérieur, soustraire au temps de vol déterminé le temps de propagation mesuré lors de la phase d'initialisation.

10. Système selon l'une quelconque des revendications 1 à 9, dans lequel le dispositif d'initialisation (405) comprend en outre, couplé à la deuxième extrémité d'au moins un guide d'onde (107T, 107R), un circuit (501) de commande de l'interrupteur d'initialisation, le circuit de commande (501) étant adapté à détecter une séquence radio d'initialisation transmise par ledit au moins un guide d'onde (107T, 107R) et à commander en conséquence la fermeture de l'interrupteur d'initialisation (407).

11. Système selon l'une quelconque des revendications 1 à 10, dans lequel lesdites ondes radio ont une fréquence porteuse comprise entre 10 GHz et 1 THz et de préférence entre 30 GHz et 300 GHz.

## Patentansprüche

1. Ein Funkwellen-Transceiver-System, das Folgendes aufweist:
- mindestens ein Paar von Wellenleitern (107T, 107R) aus einem dielektrischen Material, das einen Sendewellenleiter und einen Empfangswellenleiter aufweist;
- eine Transceiver-Schaltung (103), die mit einem ersten Ende jedes der Sende- und Empfangswellenleiter gekoppelt ist und in der Lage ist, Funkwellen, die sich jeweils in den Sende- und Empfangswellenleitern ausbreiten, zu senden und zu empfangen; und
- mindestens eine Sendeantenne (105T) und eine Empfangsantenne (105R), die jeweils mit einem zweiten Ende der Sende- und Empfangswellenleiter gekoppelt sind und in der Lage sind, die Wellen zu/von einem nicht geführten externen Medium zu senden oder zu empfangen,
wobei das System ferner ein Initialisierungsgerät (405) aufweist, das einen Initialisierungsschalter (407) aufweist, der steuerbar ist, um während einer Initialisierungsphase die Sendeantenne (105T) und die Empfangsantenne (105R) zu umgehen, um eine Umlaufverzögerung von Funkwellen in den Sende- und Empfangswellenleitern zu messen,
wobei das System konfiguriert ist, um als Radar verwendet zu werden, um Entfernungen durch Flugzeitmessung zwischen einer von der Transceiver-Schaltung (103) gesendeten Vorwärts-Funkwelle und einer von der Transceiver-Schaltung (103) empfangenen Rückwärts-Funkwelle nach Reflexion an einem externen Objekt zu schätzen.

2. Das System nach Anspruch 1, wobei mindestens ein Wellenleiter einen Kern (201) aus einem ersten dielektrischen Material aufweist, wobei der Kern (201) mit einem zweiten dielektrischen Material, das eine kleinere Dielektrizitätskonstante als das erste Material aufweist, in Kontakt steht und/oder bedeckt und/oder umgeben ist.

3. Das System nach Anspruch 2, wobei der mindestens eine Wellenleiter eine Ummantelung (203) aus dem zweiten dielektrischen Material aufweist, wobei der Kern (201) mit der Ummantelung (203) entlang seines gesamten Umfangs über im Wesentlichen die gesamte Länge des Leiters in Kontakt ist.

4. Das System nach Anspruch 2 oder 3, wobei der Kern (201) mit Ausnahme der Enden des mindestens einen Wellenleiters nicht in Kontakt mit einem elektrisch leitenden Material ist.

5. Das System nach einem der Ansprüche 2 bis 4, wobei der Kern (201) einen massiven Querschnitt aufweist.

6. Das System nach einem der Ansprüche 2 bis 4, wobei der Kern (201) einen kreuzförmigen Querschnitt aufweist.

7. Das System nach Anspruch 3, wobei die Ummantelung (203) durch ein Kunststoffelement einer Fahrzeugkarosserie gebildet wird.

8. Das System nach einem der Ansprüche 1 bis 7, wobei das zweite Ende des mindestens einen Wellenleiters (107T, 107R) über einen Verstärker (401, 403) mit mindestens einer Antenne (105T, 105R) gekoppelt ist.

9. Das System nach einem der Ansprüche 1 bis 8, das konfiguriert ist, um während einer Abschätzung der Entfernung eines externen Objekts die während der Initialisierungsphase gemessene Verzögerung von der ermittelten Flugzeit abzuziehen.

10. Das System nach einem der Ansprüche 1 bis 9, wobei die Initialisierungsvorrichtung (405) ferner eine Schaltung (501) zur Steuerung des Initialisierungsschalters aufweist, die mit dem zweiten Ende mindestens eines Wellenleiters (107T, 107R) gekoppelt ist, wobei die Steuerschaltung (501) in der Lage ist, eine von dem mindestens einen Wellenleiter (107T, 107R) übertragene Initialisierungsfunksequenz zu erfassen und dementsprechend das Einschalten des Initialisierungsschalters (407) zu steuern.

11. Das System nach einem der Ansprüche 1 bis 10, wobei die Funkwellen eine Trägerfrequenz im Bereich von 10 GHz bis 1 THz und vorzugsweise von 30 GHz bis 300 GHz aufweisen.

## Claims

1. A radio wave transceiver system, comprising:
- at least one pair of waveguides (107T, 107R) made of a dielectric material comprising a transmit waveguide and a receive waveguide;
- a transceiver circuit (103) coupled to a first end of each of said transmit and receive waveguides, capable of transmitting and of receiving radio waves respectively propagating in said transmit and receive waveguides; and
- at least one transmit antenna (105T) and one receive antenna (105R) respectively coupled to a second end of said transmit and receive waveguides, and capable of transmitting or receiving said waves to/from a non-guided external medium,
wherein the system further comprises an initialization device (405) comprising an initialization switch (407) controllable to, during an initialization phase, bypass the transmit antenna (105T) and the receive antenna (105R) to measure a round trip delay of radio waves in said transmit and receive waveguides, the system being configured to be used as a radar to estimate distances by time-of-flight measurement between a forward radio wave transmitted by the transceiver circuit (103) and a return radio wave received by the transceiver circuit (103) after reflection on an external object.

2. The system according to claim 1, wherein at last one waveguide comprises a core (201) made of a first dielectric material, the core (201) being in contact and/or covered and/or surrounded with a second dielectric material having a dielectric constant smaller than that of the first material.

3. The system according to claim 2, wherein said at least one waveguide comprises a sheath (203) made of the second dielectric material, the core (201) being in contact with the sheath (203) all along its periphery over substantially the entire length of the guide.

4. The system according to claim 2 or 3, wherein, except for the ends of said at least one waveguide, the core (201) is not in contact with an electrically-conductive material.

5. The system according to any of claims 2 to 4, wherein the core (201) has a solid cross-section.

6. The system according to any of claims 2 to 4, wherein the core (201) has a cross-shaped cross-section.

7. The system according to claim 3, wherein the sheath (203) is formed by a plastic element of a vehicle body.

8. The system according to any of claims 1 to 7, wherein the second end of at least one waveguide (107T, 107R) is coupled to at least one antenna (105T, 105R) via an amplifier (401, 403).

9. The system according to any of claims 1 to 8 configured to, during an estimation of the distance of an external object, subtract to the determined time of flight the delay measured during the initialization phase.

10. The system according to any of claims 1 to 9, wherein the initialization device (405) further comprises, coupled to the second end of at least one waveguide (107T, 107R), a circuit (501) for controlling the initialization switch, the control circuit (501) being capable of detecting an initialization radio sequence transmitted by said at least one waveguide (107T, 107R) and accordingly controlling the turning on of the initialization switch (407).

11. The system according to any of claims 1 to 10, wherein said radio waves have a carrier frequency in the range from 10 GHz to 1 THz and preferably from 30 GHz to 300 GHz.
